# EUROPÄISCHE PATENTSCHRIFT

(11) **EP 2 420 372 B1**
(45) Veröffentlichungstag und Bekanntmachung des Hinweises auf die Patenterteilung: **12.03.2014**
(21) Anmeldenummer: 10173037.2
(22) Anmeldetag: 17.08.2010
(51) Int. Cl.: B22C 9/10, B22D 17/24, B29C 45/44, B29C 33/52

(54) **Spritzgussvorrichtung mit einem wiederverwendbaren, gestaltveränderlichen Gießkern und Spritzgussverfahren unter Verwendung eines solchen Gießkerns**
Injection moulding device with a reusable, reformable foundry core and injection moulding method using such a foundry core
Dispositif de moulage par injection doté d'un noyau de fusion réutilisable, pouvant changer de forme et procédé de moulage par injection utilisant un tel noyau de fusion

(43) Veröffentlichungstag der Anmeldung: 22.02.2012
(73) Patentinhaber: Röchling Automotive AG & Co. KG, 68165 Mannheim (DE)
(72) Erfinder: Mosca, Devid, 39100, Bozen (IT); Chini, Fabrizio, 38060, Isera (IT)
(74) Vertreter: Trossin, Hans-Jürgen

(56) Entgegenhaltungen:
- EP-A1- 0 008 012
- DE-A1- 1 916 163
- FR-A- 1 456 231
- FR-A1- 2 640 188
- US-A- 2 517 902
- US-B1- 6 224 808

## Beschreibung

Die vorliegende Erfindung betrifft eine Spritzgussvorrichtung mit einem Gießkern, der ein wahlweise verfestigbares und in einen plastischen Verformungszustand erweichbares, insbesondere verflüssigbares Kernmaterial umfasst, welches von einem Hüllmaterial umgeben ist, sowie ein Spritzgussverfahren unter Verwendung eines solchen Gießkerns.

Derartige Gießkerne werden in der Gießtechnik, insbesondere beim Spritzgießen, als sogenannte "verlorene Kerne" eingesetzt. Mit derartigen Gießkernen können Gussstücke mit Hohlräumen, insbesondere hinterschneidungsbehafteten Hohlräumen, gießtechnisch hergestellt werden.

Ein solcher Gießkern ist beispielsweise aus der DE 195 30 254 A1 bekannt, welche einen schmelzbaren Gießkern offenbart, bei dem an der Außenseite des schmelzbaren Kernmaterials eine Trennschicht als Hüllmaterial aufgetragen ist, welche ein Anhaften des um den bekannten Gießkern herum spritzgegossenen Gießmaterials verhindern soll.

Dieser Gießkern wird zunächst durch einen ausschmelzbaren, hohlen Basis-Gießkern gebildet. Dieser Basis-Gießkern wird zur Herstellung eines Gussteils aus Metall oder Kunststoff verwendet, wobei der hohle Basis-Gießkern nach Beginn des Gießvorgangs zur Herstellung des Gussteils, vorzugsweise nach Abschluss dieses Gießvorgangs, mit geschmolzenem Kernmaterial aufgefüllt wird, wodurch der zuvor feste Mantel des hohlen Basis-Gießkerns sowohl durch die Wärme des in den inneren Hohlraum des Basis-Gießkerns eingefüllten geschmolzenen Kernmaterials als auch durch die Wärme des den Gießkern umgebenden Gussteils vollständig aufgeschmolzen wird.

Der Gießkern geht durch das Aufschmelzen also vollständig verloren, zurück bleibt das formlose aufgeschmolzene, fließfähige Kernmaterial.

Dieses aufgeschmolzene Kernmaterial kann erneut zur Herstellung eines schmelzbaren Gießkerns verwendet werden.

Weitere "verlorene Gießkerne" sind beispielsweise bekannt aus der DE 42 37 638 A1, DE 31 49 264 A1 sowie aus der US 5,564,447 A.

Nachteilig an den vorstehend beschriebenen Gießkernen ist der vollständige Gestaltverlust durch das Aufschmelzen des Kernmaterials, was zu einem unerwünscht hohen Aufwand führt, aus dem aufgeschmolzenen Kernmaterial erneut einen Kern zu bilden.

Darüber hinaus kann es zu unerwünschten Wechselwirkungen zwischen dem Kernmaterial und dem Gießmaterial kommen, aus welchem das Gussteil hergestellt werden soll.

Dokument DE 19 16 163 A1 offenbart eine Spritzguss-Vorrichtung und ein Spritzgussverfahren zur Reifenherstellung, bei welcher eine Kautschukmembran als ein einzelner, flexibler und weichelastischer Hüllbehälter verwendet wird, der mit einem niedrig schmelzenden Metall als Kernmaterial befüllt werden kann. Das Material des Hüllbehälters ist also unabhängig vom Grad der Verfestigung des Kernmaterials im bestimmungsgemäßen Betrieb des Gießkerns dauerhaft fest und kontinuierlich zusammenhängend, wobei das Kernmaterial zumindest in festem Zustand und während einer Veränderung seines Grades der Verfestigung zum festen Zustand hin und von diesem weg in dem Hüllbehälter aufgenommen ist. Das flüssige Kernmaterial wird nach der in der DE 19 16 163 A1 beschriebenen Lehre über eine Pumpe aus einem Vorratsbehälter in den in einer Gießkern-Formkavität eines Formwerkzeugs angeordneten Hüllbehälter gefördert. Nach dem Verfestigen des Kernmaterials im Hüllbehälter wird das die Gießkern-Formkavität bildende Formwerkzeug entfernt und um den aus dem Hüllbehälter mit verfestigtem Kernmaterial gebildeten Gießkern herum ein anderes Formwerkzeug mit einer Spritzguss-Formkavität angeordnet. In diesem anderen Formwerkzeug wird der Gießkern als Kern bei der Herstellung eines Reifens durch Spritzgießen eingesetzt. Nach dem Spitzguss-Vorgang kann das Kernmaterial des Gießkerns wieder verflüssigt und zurück in den Vorratsbehälter gepumpt werden. Danach wird das andere Formwerkzeug geöffnet und der geformte Reifen wird entnommen. Die Verfestigung und Verflüssigung wird von entsprechenden Heiz- und Kühleinrichtungen als Kernmaterial-Beeinflussungseinrichtungen unterstützt.

Aufgabe der vorliegenden Erfindung ist es, die bekannte Spritzguss-Vorrichtung bzw. das bekannte Spritzgussverfahren so weiter zu entwickeln, dass die Zykluszeiten verkürzt werden können.

Diese Aufgabe wird durch eine Spritzguss-Vorrichtung mit den Merkmalen von Anspruch 1 bzw. ein Spritzguss-Verfahren mit den Merkmalen von Anspruch 11 gelöst.

Mit "im bestimmungsgemäßen Betrieb des Gießkerns" ist die Herstellung des Gießkerns und sein bestimmungsgemäßer Gebrauch in einer Gussform bezeichnet.

Mit "dauerhaft fest" soll ausgesagt sein, dass das Hüllmaterial sich nicht verflüssigt und daher in keinen fließfähigen Zustand übergeht, wie es beim Gießkern der Fall ist.

Mit "dauerhaft kontinuierlich zusammenhängend" soll ausgesagt sein, dass das Hüllmaterial keine lediglich durch Partikelüberlagerung gebildete Hülloberfläche aufweist, sondern das Hüllmaterial ein Kontinum bildet, also beispielsweise kein Pulver- oder ähnlicher Partikelauftrag ist.

Mit "weichelastisch" soll ausgesagt sein, dass das Hüllmaterial in der Gestalt, in welcher es für einen Gießkern verwendet wird, durch, verglichen mit den beim Einsatz als Gießkern auftretenden Kräften und Drücken, sehr geringe äußere Kräfte und Drücke reversibel verformbar ist. Die zur Verformung führenden Kräfte können deutlich unterhalb der Eigengewichtskraft der aus dem Hüllmaterial gebildeten Hülle liegen.

Wenn in der vorliegenden Anmeldung von einer weichelastischen oder/und formlabilen Hülle die Rede ist, so betrifft dies einen drucklosen, im Wesentlichen mechanisch unbelasteten Zustand der Hülle. Es bezeichnet also eine Eigenschaft des Hüllmaterials in der vorliegenden Gestalt per se. Davon soll nicht ausgeschlossen sein, dass die aus Hüllmaterial gebildete Hülle durch das darin verfestigte Kernmaterial gestützt werden und so eine vom verfestigten Kernmaterial vorgegebene Form beibehalten werden kann. Weiterhin kann in entsprechenden Phasen der bestimmungsgemäßen Benutzung des Gießkerns aufgrund des von der Hülle umgebenen verfestigten Kernmaterials die weichelastische Verformungseigenschaft des Hüllmaterials herabgesetzt sein.

Wenn weiter in der vorliegenden Anmeldung von einem Verflüssigen des Kernmaterials die Rede ist, so ist damit ein Vorgang bezeichnet, welcher von einem festen Kernmaterial zu einem fließfähigem Kernmaterial führt. Es soll jedoch damit kein Viskositätsbereich bezeichnet sein, den das verflüssigte Kernmaterial aufweist. Vielmehr soll es ausreichen, wenn das Kernmaterial, gegebenenfalls unter Verwendung geeigneter Pumpen oder sonstiger Fördermittel, fließfähig ist.

Durch den beschriebenen Aufbau des Gießkerns kann das Kernmaterial mit dem es umgebenden Hüllmaterial schnell und sauber zu dem gewünschten Gießkern geformt und verfestigt werden, beispielsweise durch Verwendung einer Gießkernform.

Ebenso ist das Kernmaterial im wieder verflüssigten, also fließfähigen Zustand, durch das vorhandene Hüllmaterial schnell aus dem den Gießkern umgebenden Gussteil entfernbar.

Aufgrund der verwendeten Hülle aus Hüllmaterial ist es überdies nicht erforderlich, das wieder verflüssigte Kernmaterial vollständig aus dem Gussteil auszugießen, sondern es kann mitsamt seiner Hülle schnell, sauber und sicher aus dem Gussteil entfernt werden, was die beim Gießen, insbesondere Spritzgießen, erreichbaren Zykluszeiten verglichen mit dem Stand der Technik erheblich verringert.

Dabei spielt es grundsätzlich nur eine untergeordnete Rolle, aufgrund welcher Mechanismen oder/und phyiskalischer Effekte das Kernmaterial wahlweise verfestigbar und verflüssigbar ist. Beispielsweise kann ein Kernmaterial gewählt werden, welches unter Änderung eines von außen auf das Kernmaterial einwirkenden elektrischen Feldes verfestigbar und verflüssigbar ist. Zusätzlich oder alternativ kann das Kernmaterial magnetostriktiv sein, also unter Änderung eines von außen auf das Kernmaterial einwirkenden magnetischen Feldes verfestigbar und verflüssigbar sein, wie dies beispielsweise bei sogenannten Ferrofluiden der Fall ist. Weiterhin ist denkbar, dass das Kernmaterial zusätzlich oder alternativ durch Änderung seiner Temperatur wahlweise verfestigbar und verflüssigbar ist, insbesondere schmelzbar ist. Es sollen jedoch auch glasartige, also amorphe Kernmaterialien nicht ausgeschlossen sein, welche ebenfalls durch Temperaturänderung verfestigbar und verflüssigbar sind, jedoch im Gegensatz zum Schmelzen und Erstarren ohne wesentliche Änderung ihrer molekularen Struktur.

Beispielsweise kann das Kernmaterial thermoplastischen Kunststoff, wie etwa TPE, TPU, TPA oder SEBS oder auch PE, PP und dergleichen oder/und Wachs umfassen.

Als Hüllmaterial ist bevorzugt an ein Material mit elastomeren Verformungseigenschaften gedacht. Beispielsweise kann das Hüllmaterial ein Silikon-Elastomer sein oder kann ein Elastomer sein, wie etwa Gummi. Das Hülllmaterial kann verstärkt sein, etwa durch Fasern, Fasergeflecht oder sonstige Füllstoffe. Auch Folien, insbesondere Metallfolien, können zur Bildung der Hülle verwendet werden.

Vorzugsweise ist das Hüllmaterial dann, wenn der Gießkern seine endgültige Gestalt aufweist und das Kernmaterial verfestigt ist, gegen seine Materialelastizität gedehnt und steht unter innerer Zugspannung.

Gemäß einer Weiterbildung der vorliegenden Erfindung kann das Hüllmaterial auch aus wenigstens zwei, drei oder mehr Schichten aufgebaut sein, wobei die Schichten ausgehend von einem Innenbereich der durch das Hüllmaterial gebildeten Hülle radial nach außen aufeinander folgen.

Der oben geschilderte Gießkern wird erfindungsgemäß in einem Formwerkzeug verwendet.

Die Spritzgussvorrichtung weist erfindungsgemäß eine Kernmaterial-Beinflussungseinrichtung auf, welche dazu ausgebildet ist, das Kernmaterial zur Verflüssigung oder/und zur Verfestigung zu beeinflussen.

Wie oben im Zusammenhang mit dem Kernmaterial bereits ausgeführt wurde, kann die Kernmaterial-Beeinflussungseinrichtung zur Änderung eines elektrischen oder/und magnetischen Feldes in ihrer Umgebung oder/und zur Änderung einer Temperatur ihrer Umgebung ausgebildet sein. Sofern sich das Kernmaterial in der von der Kernmaterial-Beeinflussungseinrichtung beeinflussbaren Umgebung befindet, kann mit der Kernmaterial-Beeinflussungseinrichtung gezielt eine Verfestigung oder/und Verflüssigung des Kernmaterials herbeigeführt werden.

Die Spritzguss-Vorrichtung umfasst erfindungsgemäß Hüllbehälter aus Hüllmaterial, in welchen Kernmaterial wenigstens vorübergehend aufgenommen ist. Vorzugsweise kann das Kernmaterial in die Hüllbehälter eingeführt und aus diesem wieder ausgelassen werden. Dabei ist es zur Erzielung kurzer Zykluszeiten besonders bevorzugt, die Hüllbehälter nicht vollständig zu entleeren, so dass ein Rest an Kernmaterial darin verbleiben kann. Zur Befüllung der Hüllbehälter mit Kernmaterial kann die Spritzguss-Vorrichtung eine Füllvorrichtung umfassen, welche mit den Hüllbehältern entweder bereits gekoppelt ist oder zumindest koppelbar ist. Die Kopplung der Füllvorrichtung mit den Hüllbehältern soll so gestaltet sein, dass die Hüllbehälter wahlweise mittels der Füllvorrichtung mit fließfähigem Kernmaterial befüllbar sind.

Vorzugsweise sind die Hüllbehälter beutelartig ausgebildet, um ihre Anpassbarkeit an eine Vielzahl von Gießkerngeometrien gewährleisten zu können.

Zum Ablassen von fließfähigem Kernmaterial aus den Hüllbehältern - etwa nach Umgießen oder Umspritzen des in eine Gießkavität eingelegten Gießkerns mit Gießmaterial, aber vor Entförmung des Gussstücks - kann die Spritzguss-Vorrichtung vorteilhafterweise derart weitergebildet sein, dass sie eine derart mit wenigstens einem der Hüllbehälter koppelbare oder gekoppelte Abflussvorrichtung umfasst, dass im Hüllbehälter aufgenommenes Kernmaterial mittels der Abflussvorrichtung aus diesem entfernbar ist.

Hierzu kann die Spritzguss-Vorrichtung gemäß einer Weiterbildung der vorliegenden Erfindung wenigstens eine Fördervorrichtung, insbesondere Pumpe, aufweisen, welche dazu ausgebildet ist, fließfähiges Kernmaterial in den Hüllbehälter zu fördern. Ebenso kann eine weitere Pumpe vorgesehen sein, welche dazu ausgebildet ist, fließfähiges Kernmaterial aus dem Hüllbehälter heraus zu fördern. Aus Gründen einer Verringerung von erforderlichen Bauteilen ist vorzugsweise wenigstens eine förderrichtungsumkehrbare Fördervorrichtung, insbesondere Pumpe, vorgesehen, welche fließfähiges Kernmaterial sowohl zur Befüllung wie auch zur Entleerung des Hüllbehälters fördern kann, wobei mit Entleerung nicht notwendigerweise eine vollständige Entleerung des Hüllbehälters bezeichnet ist.

Um die Menge an benötigtem Kernmaterial gering zu halten, kann die Spritzguss-Vorrichtung gemäß einer weiteren vorteilhaften Weiterbildung der vorliegenden Erfindung einen Kernmaterial-Vorratsbehälter umfassen, in welchem ein vorbestimmter Kernmaterialvorrat bereitgestellt ist. Vorzugsweise fördert die oben genannte wenigstens eine Fördervorrichtung fließfähiges Kernmaterial aus dem Kernmaterial-Vorratsbehälter hinaus und in diesen hinein.

Zur weiteren Verringerung der zur Realisierung der hier beschriebenen Gießkern-Formvorrichtung benötigten Anzahl an Bauteilen kann vorgesehen sein, dass die Füllvorrichtung und die Abflussvorrichtung eine gemeinsame Durchflussöffnung aufweisen. Vorzugsweise nutzen die Füllvorrichtung und die Abflussvorrichtung zumindest abschnittsweise gemeinsame Durchflusskanäle.

Der oben beschriebene Gießkern ist zur Verwendung in erfindungsgemäßen Spritzgießverfahren von Interesse, da bei Spritzgießverfahren aufgrund der verwendeten Gießmaterial, in der Regel thermoplastische Kunststoffe, nur moderate Prozesstemperaturen auftreten, dennoch ein hoher Automationsgrad möglich ist, was die Effizienz des Verfahrens hinsichtlich der pro Zeiteinheit erzeugbaren Gussteile erhöht.

Erfindungsgemäß ist in einem einzigen Formwerkzeug sowohl eine Spritzguss-Kavität, wie auch eine Gießkern-Formkavität ausgebildet. Dadurch wird die zur Realisierung der Spritzgussvorrichtung notwendige Anzahl an Bauteilen im Vergleich zum Stand der Technik verringert.

Die Spritzgussvorrichtung weist weiter eine Umlegevorrichtung auf, welche dazu ausgebildet ist, den Gießkern zwischen der Gießkern-Formkavität und der Spritzguss-Kavität umzulegen. Somit kann der Gießkern in der Gießkern-Formkavität erzeugt und im fertigen Zustand aus dieser mit kurzem Umlegewegen in die Spritzguss-Kavität umgelegt werden um dort nach dem Schließen des Formwerkzeugs von Gießmaterial umspritzt zu werden. Das Umlegen umfasst dabei insbesondere ein Entnehmen des Gießkerns aus der Gießkern-Formkavität und ein Einlegen desselben in die Spritzgusskavität.

Dann, wenn das Kernmaterial nach dem Ausfüllen der Spritzguss-Kavität mit Gießmaterial wieder verflüssigt wird, ist die Umlegevorrichtung auch dazu ausgebildet, den Gießkern aus der Spritzguss-Kavität zu entnehmen, insbesondere aus dem ihn umgebenden Spritzgussteil zu entnehmen, und in die Gießkern-Formkavität einzulegen, so dass dort erneut ein Gießkern mit der gewünschten Geometrie geformt werden kann.

Da für jeden Spritzgießvorgang ein Gießkern hergestellt und wieder entformt werden muss, kann der Takt der Gießkernerzeugung mit dem Spritzgusstakt koordiniert werden. Die Spritzgussvorrichtung umfasst eine Mehrzahl von Hüllbehältern, wobei sich ein erster Hüllbehälter in der Gießkern-Formkavität befindet, während sich wenigstens ein zweiter Hüllbehälter in der Spritzguss-Kavität befindet. Dies führt zu einer erheblichen Verkürzung der Zykluszeiten im Vergleich zum Stand der Technik, da während eines Spritzgießvorgangs bereits ein Gießkern für einen unmittelbar nachfolgenden Spritzgießvorgang hergestellt werden kann.

Der oben beschriebene Gießkern wird in dem erfindungsgemäßen Spritzgussverfahren hergestellt, welches die nachfolgend genannten Schritte umfasst:
- Bereitstellen eines fließfähigen, aber reversibel verfestigbaren Kernmaterials in einem für sich alleine genommen weichelastischen oder/und formlabilen Hüllbehälter,
- Einlegen des mit fließfähigem Kernmaterial gefüllten Hüllbehälters in eine Gießkern-Formkavität,
- Verfestigen des Kernmaterials in dem in eine Gießkern-Formkavität eingelegten Hüllbehälter und
- Entnehmen des Hüllbehälters mit verfestigtem Kernmaterial aus der Gießkern-Formkavität.

Dabei kann der Schritt des Bereitstellens vorzugsweise einen Schritt des Befüllens des Füllbehälters mit fließfähigem Kernmaterial umfassen. So kann der zunächst nicht vollständig befüllte Hüllbehälter einfach in die Gießkern-Formkavität eingelegt werden. Außerdem kann bei dem hier angedachten iterativen Gießkern-Herstellungsverfahren ein wenigstens teilweise entleerter Hüllbehälter wesentlich einfacher aus einem fertiggestelltem Gussteil entnommen werden, als wenn lediglich das Kernmaterial des Gießkerns ohne Entnahme aus dem Hüllbehälter verflüssigt würde.

Besonders bevorzugt umfasst das Befüllen des Hüllbehälters mit fließfähigem Kernmaterial ein Befüllen des Hüllbehälters gegen dessen Materialelastizität.

Durch Verfestigung des Kernmaterials kann das verfestigte Kernmaterial die elastischen Kräfte des Hüllmaterials aufnehmen. Dann jedoch, wenn das Kernmaterial nach dem Erzeugen des Spritzgussteils zur Entnahme aus diesem wieder verflüssigt wird, wirkt die im Hüllmaterial herrschende Zugspannung drucksteigernd auf das fließfähige Kernmaterial und kann somit eine Entleerung des Hüllbehälters wenigstens unterstützen.

Der Schritt des Verfestigens kann, wie oben bereits dargelegt wurde, eine Änderung eines elektrischen oder/und magnetischen Feldes umfassen, in welchem sich das Kernmaterial zumindest abschnittsweise befindet. Zusätzlich oder alternativ kann der Schritt des Verfestigens des Kernmaterials eine Änderung der Temperatur des Kernmaterials umfassen. Dies ist häufig eine Verringerung der Temperatur des Kernmaterials, um bei herkömmlichen schmelzbaren Kernmaterialien, wie etwa Wachs, die thermisch bedingte Verfestigung zu erreichen.

Weiterhin umfasst das erfindungsgemäße Spritzgussverfahren einen zusätzlichen Schritt des Verflüssigens des Kernmaterials im Hüllbehälter, um den Gießkern aus dem fertiggestelltem Gussteil zu entnehmen. Hierzu kann das Verfahren besonders bevorzugt einen Schritt eines, bevorzugt teilweisen, Ablassens des verflüssigten, also dann fließfähigen Kernmaterials aus dem Hüllbehälter umfassen, so dass der Hüllbehälter wenigstens teilweise entleert wird, was seine Entnahme aus dem fertiggestellten Gussteil erheblich erleichtert.

Das erfindungsgemäße Spritzgussverfahren umfasst zusätzlich folgende Schritte:
- Einlegen des Gießkerns in eine Spritzguss-Kavität,
- Einspritzen von fließfähigem Kunststoff in die Spritzguss-Kavität,
- Verflüssigen des Kernmaterials im Hüllbehälter in der Spritzguss-Kavität,
- Entfernen des Hüllbehälters aus dem eingespritzten Kunststoff, und
- Entnahme des eingespritzten ausgehärteten Kunststoffs aus der Spritzguss-Kavität.

Gerade dann, wenn das Verfahren zur zyklischen Herstellung von Spritzgussteilen dient, kann es vorzugsweise den oben bereits genannten Schritt eines Ablassens von fließfähigem Kernmaterial aus dem Hüllbehälter umfassen, um das Entfernen des Hüllbehälters aus dem eingespritzten Kunststoff zu erleichtern.

Die vorliegende Erfindung wird nachfolgend anhand der beiliegenden Figuren näher erläutert. Es stellt dar:
- Figur 1: eine erfindungsgemäße Spritzgussvorrichtung mit je einem Gießkern zu Beginn einer Gießkernerzeugung sowie in Spritzguss-Bereitschaftsteflung,
- Figur 2: die Spritzgussvorrichtung von Figur 1 bei fortschreitender Gießkernherstellung und bei mit Gießmaterial gefüllter Spritzguss-Kavität,
- Figur 3: die Spritzgussvorrichtung der Figuren 1 und 2 in der Phase der Verfestigung des Kernmaterials im gerade herzustellenden Gießkern sowie mit teilentleertem Gießkern in der mit dem erzeugten Spritzgussteil beladenen Spritzguss-Kavität und
- Figur 4: das Formwerkzeug mit sowohl aus der Gießkern-Formkavität als auch aus dem erzeugten Spritzgussteil entnommenen Gießkernen, jedoch mit durch das hergestellte Spritzgussteil beladener Spritzguss-Kavität.

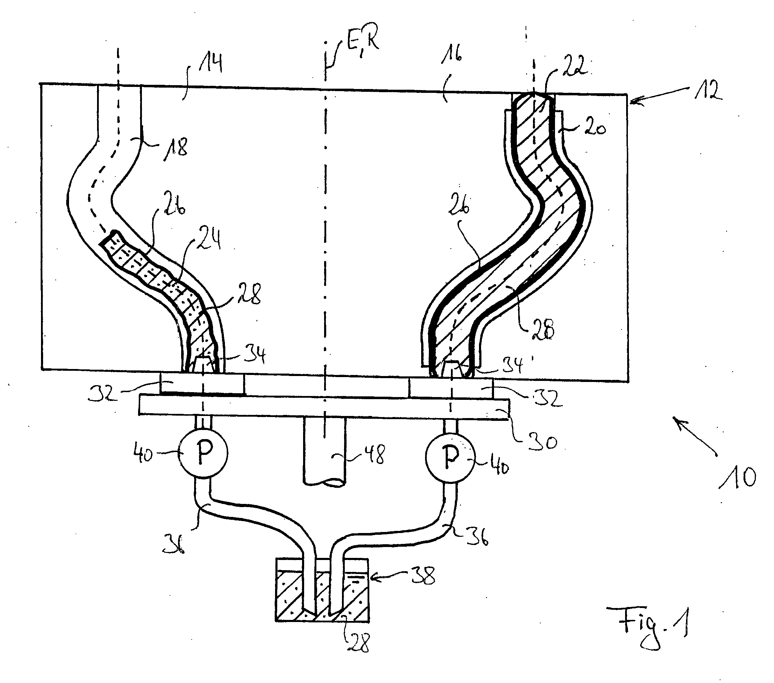

In Figur 1 ist eine erfindungsgemäße Spritzgussvorrichtung, welche wenigstens einen Gießkern verwendet, allgemein mit 10 bezeichnet.

Die lediglich grobschematisch dargestellte Spritzgussvorrichtung 10 umfasst unter anderem ein Formwerkzeug 12, welches einen Gießkern-Formabschnitt 14 und einen Spritzguss-Formabschnitt 16 aufweist. Die beiden Formabschnitte sind durch eine virtuelle Mittelebene E voneinander getrennt. Die Mittelebene E ist orthogonal zur Zeichenebene der Figur 1 orientiert.

Der Gießkern-Formabschnitt 14 weist eine Gießkern-Formkavität 18 auf, welche eine Negativform des für den Spritzgießvorgang benötigten Gießkerns darstellt.

Der Spritzguss-Formabschnitt 16 weist eine Spritzguss-Kavität 20 auf, in welche ein fertiggestellter erster Gießkern 22 eingelegt ist. Die Spritzguss-Kavität 20 dient zur spritzgusstechnischen Herstellung eines gekrümmten Rohres.

In die Gießkern-Formkavität 18 ist zu dem in Figur 1 gezeigten Zeitpunkt ein Gießkern-Rohling 24 eingelegt, welcher in der Gießkern-Formkavität 18 zu einem Gießkern fertiggestellt werden soll, wie ihn auch der zuvor genannte erste Gießkern 22 darstellt.

Sowohl der erste Gießkern 22 wie auch der Gießkern-Rohling 24 weisen eine weichelastische oder/und formlabile Hülle 26 auf, welche beispielsweise aus Silikon-Elastomer oder einem Elastomer, wie etwa Gummi, bestehen kann.

In der Hülle 26 befindet sich Kernmaterial 28. Das Kernmaterial 28 im Gießkern-Rohling 24 ist flüssig, was durch die zur Straffur hinzutretende Punktierung angedeutet sein soll. Das Gießkernmaterial 28 des ersten Gießkerns 22 ist dagegen verfestigt, was durch bloße Straffur gekennzeichnet sein soll.

Das verflüssigte Kernmaterial 28 im Gießkern-Rohling 24 ist in dem in Figur 1 dargestellten Stadium im Wesentlichen drucklos, d.h. die Hülle 26 mit elastomeren Verformungseigenschaften kann im Wesentlichen schlaff sein.

Die Spritzgussvorrichtung 10 kann weiter eine Trägervorrichtung 30 umfassen, auf welcher für jeden Hüllbehälter 26, also für jeden Gießkern 22 und 24, je eine Düsenvorrichtung 32 montiert sein kann, mit welcher der jeweils zugeordnete Hüllbehälter 26 vorzugsweise derart montiert und gekoppelt ist, dass ein Auslassende (gemeinsame Durchflussöffnung 34) der Düsenvorrichtung in den zugeordneten Hüllbehälter 26 hineinragt.

Vorzugsweise ist die Düsenvorrichtung 32 als kombinierte Düsen- und Ventilvorrichtung 32 ausgebildet, so dass der Innenraum des jeweils zugeordneten Hüllbehälters 26 vorzugsweise strömungsmechanisch absperrbar ist. Dadurch kann ein einmal in dem im jeweiligen Hüllbehälter 26 aufgenommenen fließfähigen Kernmaterial 28 aufgebauter Fluiddruck durch Sperren der Düsen- und Ventilvorrichtung 32 ohne Energiezufuhr von außen gehalten werden.

Die Ventilfunktion kann auch gesondert von der Düsenvorrichtung realisiert sein.

Jede Düsen- und Ventilvorrichtung 32 kann, vorzugsweise über einen Durchflusskanal 36, mit einem Kernmaterial-Vorratsbehälter 38 verbunden sein, in dem ein Vorrat an fließfähigem Kernmaterial 28 bereitgestellt ist.

Vorzugsweise ist in jedem Durchflusskanal 36 je eine Pumpe 40 vorgesehen, welche als Fördervorrichtung zur Förderung von Kernmaterial 28 aus dem Kernmaterial-Vorratsbehälter 38 in jeweilige Hüllbehälter 26 und zurück ausgebildet ist. Es handelt sich bei den Pumpen 40 also vorzugsweise um förderrichtungsumkehrbare Pumpen.

Die Trägervorrichtung 30 ist vorzugsweise wenigstens um eine in der Mittelebene E liegende Rotationsachse R drehbar, besonders bevorzugt schrittweise um jeweils 180° drehbar, um den ersten Gießkern 22 von der Spritzguss-Kavität 20 zur Gießkern-Formkavität 18 zu bewegen und vorzugsweise in diese einzulegen sowie gleichzeitig einen aus dem Gießkern-Rohling 24 gebildeten fertigen Gießkern von der Gießkern-Formkavität 18 zur Spritzguss-Kavität 20 zu bewegen und vorzugsweise in diese einzulegen.

Zusätzlich zu der geschilderten Rotierbarkeit der Trägervorrichtung 30 kann diese in weitere Bewegungsrichtungen bewegbar oder/und um weitere Rotationsachsen drehbar sein, um einen Transport der Gießkerne zwischen den Kavitäten 18 und 20 zu erleichtern.

Schließlich kann die Spritzgussvorrichtung 10 eine in den Figuren 1 bis 4 nicht dargestellte Steuervorrichtung umfassen, um in vorteilhafter Weise eine Automatisierung oder wenigstens Teilautomatisierung des Gießkern-Herstellungsprozesses oder/und des Spritzgießprozesses an dem kombinierten Gießkern- und Spritzguss-Formwerkzeug 12 zu ermöglichen.

Ausgehend von dem in Figur 1 beispielhaft gezeigten Zustand kann die dem Gießkern-Rohling 24 zugeordnete, in Figur 1 linke Pumpe 40 mit der Förderung von fließfähigem Kernmaterial 18 aus dem Kernmaterial-Vorratsbehälter 38 in den Innenbereich des Hüllbehälters 26 beginnen. Dabei kann der Hüllbehälter 26 durch den von der Pumpe 40 gelieferten Druck gegen seine Materialelastizität mit fließfähigem Kernmaterial gefüllt werden.

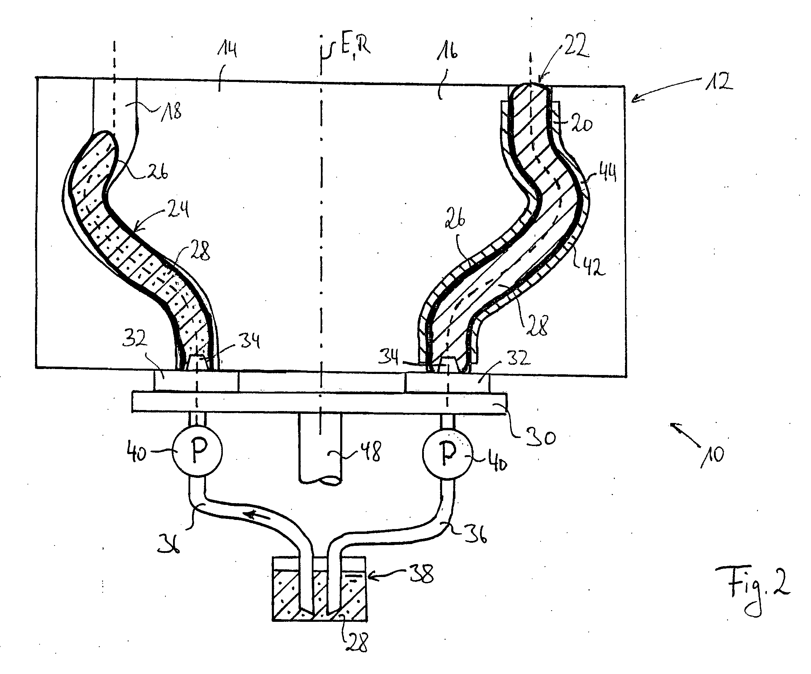

In Figur 2 ist eine im Vergleich zu jener der Figur 1 später gelegene Phase der Gießkernherstellung einerseits und des Spritzgießverfahrens andererseits dargestellt.

Im Gießkern-Formabschnitt 14 fördert die in Figur 2 linke Pumpe 40 aktuell fließfähiges Kernmaterial 28 in den Hüllbehälter 26, wobei dieser unter dem Fülldruck des fließfähigem Kernmaterials 28 gegen seine Materialelastizität ausgedehnt wird.

Im Vergleich zu dem in Figur 1 gezeigten Zustand hat der entstehende Gießkern 24 bereits etwa 80 % des Volumens der Gießkern-Formkavität 18 eingenommen.

Im Spritzguss-Formabschnitt wurde inzwischen in die Spritzguss-Kavität 20 Gießmaterial 42 eingespritzt und dadurch ein den ersten Gießkern 22 umgebendes Gussteil 44 erzeugt.

Das Gießmaterial 42 des Gussteils 44 ist in dem dargestellten Beispiel ein thermoplastischer Kunststoff, welcher seine Wärme an den umgebenden Werkstoff des Spritzguss-Formabschnitts 16 und an den ersten Gießkern 22 abgibt und dabei erstarrt.

Das Kernmaterial 28 im ersten Gießkern 22 wird im dargestellten Beispiel durch die vom Spritzgussteil 44 aufgenommene Wärme über seinen eigenen Schmelzpunkt hinaus erwärmt.

Vorzugsweise ist während der so bewirkten Verflüssigung des Kernmaterials 28 im ersten Gießkern 22 das Ventil der Düsen- und Ventilvorrichtung 32 geschlossen, um ein vorzeitiges Abfließen von verflüssigtem Kernmaterial 28 aus dem ersten Gießkern 22 unter dem von dem elastisch gedehnten Hüllmaterial des Hüllbehälters 26 gebildeten Druck zu verhindern.

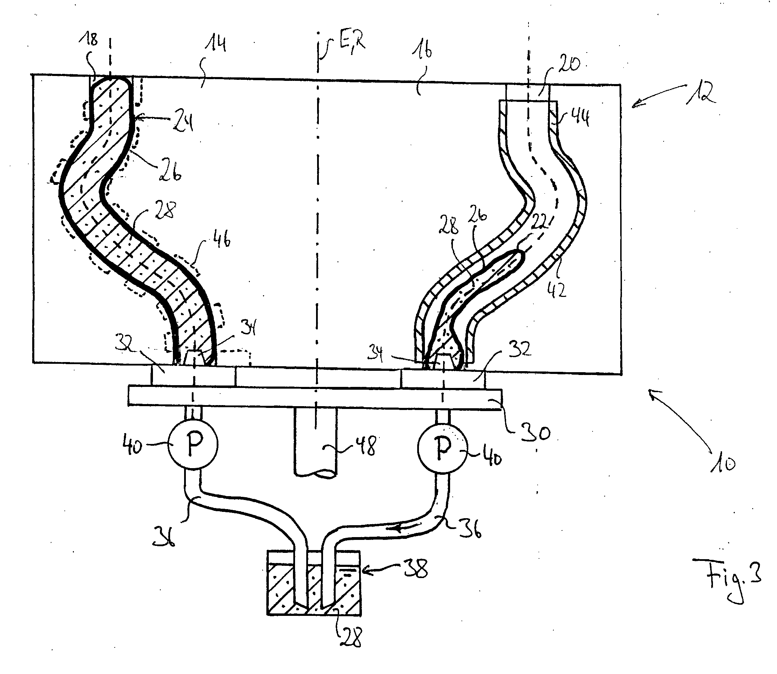

In Figur 3 ist ein zeitlich verglichen mit jenem der Figur 2 noch später liegender Zustand der Spritzgussvorrichtung 10 gezeigt.

Das Kernmaterial 28 des ersten Gießkerns 22 ist zwischenzeitlich durch Aufnahme von Wärme aus dem Gießmaterial 42 des Gussstücks 44 vollständig verflüssigt worden. Das Ventil der dem ersten Gießkern 22 zugeordneten Düsen- und Ventilvorrichtung 32 wurde geöffnet, so dass fließfähiges Kernmaterial 28 von der dem ersten Gießkern zugeordneten Pumpe 40 unter Unterstützung durch den von dem elastisch gedehnten Hüllbehälter 28 gebildeten Druck aus dem Innenbereich des ersten Gießkerns 22 in den Kernmaterial-Vorratsbehälter 38 gefördert wurde.

Dementsprechend hat sich das Volumen des ersten Gießkerns 26 erheblich verkleinert, und zwar vorzugsweise durch Verringerung aller Abmessungen des ersten Gießkerns 22, so dass dieser von der Innenfläche des Gussstücks 44 weggeschrumpft ist.

Es sei an dieser Stelle nachgetragen, dass dann, wenn die Wärmeabgabe vom Gussstück an den ersten Gießkern 22 nicht zum vollständigen Aufschmelzen des Kernmaterials 28 im ersten Gießkern 22 ausreicht, in dem Spritzguss-Formabschnitt 16 eine Heizvorrichtung vorgesehen sein kann, die die notwendige Wärme zum Aufschmelzen des Kernmaterials 28 liefert. Dies kann beispielsweise durch das Bereitstellen von Heizschlangen um die Spritzguss-Kavität 20 herum geschehen. Je nach verwendetem Kernmaterial kann dessen Verflüssigung auch unabhängig von der Wärmeaufnahme durch Änderung eines elektrischen oder/und magnetischen Feldes erfolgen, in dem sich der erste Gießkern 22 befindet. Hierzu kann an der Spritzgussvorrichtung 10 eine geeignete Feldveränderungsvorrichtung vorgesehen sein.

Vorzugsweise ist daher das Kernmaterial 28 dann, wenn es durch Veränderung seiner Temperatur verfestigbar und verflüssigbar ist, derart gewählt, dass seine Verflüssigungstemperatur unter jener des verwendeten Gießmaterials 42 liegt, so dass durch das Aufschmelzen des verfestigten Kernmaterials 28 im ersten Gießkern 22 nicht auch das Gussstück 44 erneut erweicht wird.

Im Gießkern-Formabschnitt 14 ist mittlerweile die Gießkern-Formkavität 18 nahezu vollständig, zumindest ausreichend mit dem Gießkern-Rohling 24 ausgefüllt, so dass der Gießkern-Rohling 24 seine gewünschte Gestalt erreicht hat.

Das Ventil der dem Gießkern-Rohling 24 zugeordneten Düsen- und Ventilvorrichtung 32 ist geschlossen um einen Rückfluss von immer noch fließfähigem Kernmaterial 28 aus dem elastisch gedehnten Hüllbehälter 26 heraus in Richtung des Kernmaterial-Vorratsbehälters 38 zu verhindern.

Wie in Figur 3 im Gießkern-Formabschnitt 14 außerhalb der Gießkern-Formkavität 18 strichliniert angedeutet ist, ist im Formwerkzeug 12 um die Gießkern-Formkavität 18 herum, vorzugsweise meanderförmig, eine Kühlmittelleitung 46 gelegt, welche in dem in Figur 3 gezeigten Zustand mit Kühlmittel durchströmt wird, um so dem in der Gießkern-Formkavität 18 befindlichen Kernmaterial 28 Wärme zu entziehen und es dadurch zu verfestigen. Je nach verwendetem Kernmaterial 28 kann auch dem Gießkern-Formabschnitt 14 eine entsprechende Feldveränderungsvorrichtung zugeordnet sein.

Dann, wenn das Kernmaterial 28 in der Gießkern-Formkavität 18 verfestigt ist, ist der Gießkern-Rohling 24 zu einem zweiten Gießkern 24 fertiggestellt.

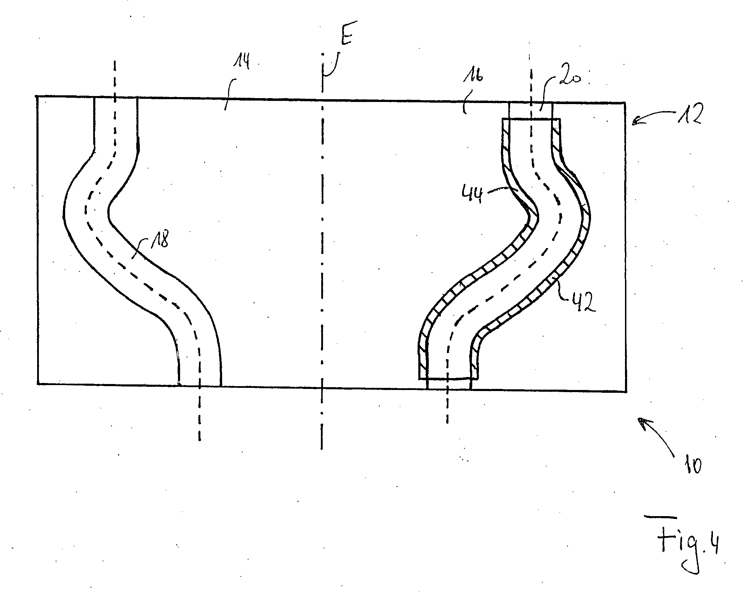

In diesem Zustand kann durch die Trägervorrichtung 30 sowohl der erste Gießkern 22 aus dem Gussstück 44 als auch der zweite Gießkern 24 aus der Gießkern-Formkavität 18 entnommen werden. Ein solcher Zustand ist in Figur 4 dargestellt, bei welchem lediglich das Gussstück 44 aus der Spritzguss-Kavität 20 ausgeworfen zu werden braucht. Auch dies kann automatisiert geschehen.

Die Kühlschlangen 46 von Figur 3 sind in den Figuren 1, 2 und 4 der übersichtlichkeitshalber nicht dargestellt.

Wenn nun nach dem Auswerfen des Gussstücks 44 aus der Spritzguss-Kavität 20 der Träger 30 um seine Drehwelle 48 um 180° gedreht wird, kann der vormals erste Gießkern als Gießkern-Rohling 22 in die Gießkern-Formkavität 18 eingelegt werden und kann der zweite Gießkern 24 in die Spritzguss-Kavität 20 eingelegt werden. Damit ist der in Figur 1 dargestellte Zustand erneut erreicht und ein neuer Zyklus zur Herstellung eines Gussteils 44 kann beginnen und in der oben beschriebenen Weise ablaufen.

## Patentansprüche

1. Spritzguss-Vorrichtung (10), umfassend:
- ein Formwerkzeug (12), in welchem sowohl eine Spritzguss-Kavität (20) als auch eine Gießkem-Formkavität (18) ausgebildet ist,
- wenigstens zwei weichelastische oder/und formlabile Hüllbehälter (26), wobei wenigstens ein erster Hüllbehälter (26) sich in der Gießkern-Formkavität (18) befindet, während sich wenigstens ein zweiter Hüllbehälter (26) in der Spritzguss-Kavität (20) befindet,
- wenigstens einen Gießkern (22), umfassend einen der Hüllbehälter (26) und ein wahlweise verfestigbares und in einen plastischen Verformungszustand erweichbares, insbesondere verflüssigbares Kemmaterial (28), wobei das Material des Hüllbehälters (26) unabhängig vom Grad der Verfestigung des Kemmaterials (28) im bestimmungsgemäßen Betrieb des Gießkerns (22) dauerhaft fest und kontinuierlich zusammenhängend ist, und wobei das Kernmaterial (28) zumindest in festem Zustand und während einer Veränderung seines Grades der Verfestigung zum festen Zustand hin und von diesem weg in dem Hüllbehälter (26), aufgenommen ist,
- eine Kernmaterial-Beeinflussungseinrichtung (46), welche dazu ausgebildet ist, das Kernmaterial (28) zur Verflüssigung oder/und Verfestigung zu beeinflussen, und
- eine Umlegevorrichtung (30, 48), welche dazu ausgebildet ist, den Gießkern (22, 24) zwischen der Gießkern-Formkavität (18) und der Spritzguss-Kavität (20) umzulegen.

2. Spritzguss-Vorrichtung (10) nach Anspruch 1,
**dadurch gekennzeichnet, dass** das Kernmaterial (28) unter Änderung eines von außen auf es einwirkenden elektrischen oder/und magnetischen Feldes oder/und durch Änderung seiner Temperatur wahlweise verfestigbar und verflüssigbar ist.

3. Spritzguss-Vorrichtung (10) nach Anspruch 1 oder 2,
**dadurch gekennzeichnet, dass** das Kernmaterial (28) thermoplastischen Kunststoff umfasst.

4. Spritzguss-Vorrichtung (10) nach einem der vorhergehenden Ansprüche,
**dadurch gekennzeichnet, dass** das Material der Hüllbehälter (26) ein Material mit elastomeren Verformungseigenschaften ist.

5. Spritzguss-Vorrichtung (10) nach einem der vorhergehenden Ansprüche,
**dadurch gekennzeichnet, dass** sie eine derart mit wenigstens einem der Hüllbehälter (26) koppelbare oder gekoppelte Füllvorrichtung (32, 36, 38, 40) umfasst, dass der Hüllbehälter (26) wahlweise mittels der Füllvorrichtung (32, 36, 38, 40) mit fließfähigem Kernmaterial füllbar ist.

6. Spritzguss-Vorrichtung (10) nach Anspruch 5,
**dadurch gekennzeichnet, dass** sie eine derart mit dem Hüllbehälter (26) koppelbare oder gekoppelte Abflussvorrichtung (32, 36, 38, 40) umfasst, dass im Hüllbehälter (26) aufgenommenes Kernmaterial (38) mittels der Abflussvorrichtung aus diesem entfernbar ist.

7. Spritzguss-Vorrichtung (10) nach Anspruch 6,
**dadurch gekennzeichnet, dass** die Füllvorrichtung (32, 36, 38, 40) und die Abflussvorrichtung (32, 36, 38, 40) eine gemeinsame Durchflussöffnung (34) aufweisen.

8. Spritzguss-Vorrichtung (10) nach Anspruch 7,
**dadurch gekennzeichnet, dass** die Füllvorrichtung (32, 36, 38, 40) und die Abflussvorrichtung (32, 36, 38, 40) zumindest abschnittsweise gemeinsame Durchflusskanäle (36) aufweisen.

9. Spritzguss-Vorrichtung (10) nach Anspruch 7 oder 8,
**dadurch gekennzeichnet, dass** die Füllvorrichtung (32, 36, 38, 40) und die Abflussvorrichtung (32, 36, 38, 40) eine gemeinsame Fördervorrichtung (40) umfassen, welche dazu ausgebildet ist, wahlweise fließfähiges Kernmaterial (28) von einem Kemmaterial-Vorratsbereich (38) in den Hüllbehälter (26) oder von dem Hüllbehälter (26) in den Kemmaterial-Vorratsbereich (38) zu fördern.

10. Spritzguss-Vorrichtung (10) nach einem der vorhergehenden Ansprüche,
**dadurch gekennzeichnet, dass** die Kernmaterial-Beeinflussungsvorrichtung (46) zur Änderung eines elektrischen oder/und magnetischen Feldes oder/und zur Änderung einer Temperatur ihrer Umgebung ausgebildet ist.

11. Spritzgussverfahren, welches unter Verwendung einer Spritzgussvorrichtung (10) nach einem der vorhergehenden Ansprüche durchgeführt wird, umfassend die folgenden Schritte:
- Bereitstellen des fließfähigen, aber reversibel verfestigbaren Kernmaterials (28) in einem der für sich alleine genommen weichelastischen oder/und formlabilen Hüllbehälter (26),
- Einlegen des mit fließfähigem Kernmaterial (28) gefüllten Hüllbehälters (26) in die Gießkern-Formkavität (18) der Spritzguss-Vorrichtung (10),
- Verfestigen des Kernmaterials (28) in dem in die Gießkern-Formkavität (18) eingelegten Hüllbehälter (26) und
- Umlegen des aus dem Hüllbehälter (26) mit verfestigtem Kernmaterial (28) gebildeten Gießkerns (22) aus der Gießkern-Formkavität (18) in die Spritzguss-Kavität (20) vermittels der Umlegevorrichtung (30, 48),
- Einspritzen von fließfähigem Kunststoff (42) in die Spritzguss-Kavität (20),
- Verflüssigen des Kernmaterials (28), welches sich in dem Hüllbehälter (26) in der Spritzguss-Kavität (20) befindet,
- Entfernen des Hüllbehälters (26) aus dem eingespritzten Kunststoff (42),
- Entnahme des eingespritzten ausgehärteten Kunststoffs (42) aus der Spritzguss-Kavität (20), und
- Umlegen des Hüllbehälters (26) aus der Spritzguss-Kavität (20) in die Gießkern-Formkavität (18), wobei während eines Spritzgießvorgangs im gleichen Formwerkzeug (12) ein Gießkern (22) für einen unmittelbar nachfolgenden Spritzgießvorgang hergestellt wird.

12. Spritzgussverfahren nach Anspruch 11, wobei der Schritt des Bereitstellens einen Schritt des Befüllens des Hüllbehälters (26) mit fließfähigem Kernmaterial (28) umfasst.

13. Spritzgussverfahren nach Anspruch 11 oder 12, wobei der Schritt des Verfestigens eine Änderung eines elektrischen oder/und magnetischen Feldes, in welchem sich das Kernmaterial (28) zumindest abschnittsweise befindet, oder/und eine Änderung der Temperatur des Kernmaterials (28), insbesondere deren Verringerung umfasst.

14. Spritzgussverfahren nach Anspruch 11, 12 oder 13, wobei das Verfahren nach dem Schritt des Verflüssigens des Kernmaterials (28) im Hüllbehälter (26) einen Schritt eines Ablassens des dann fließfähigen Kernmaterials (28) aus dem Hüllbehälter (26) umfasst.

15. Spritzgussverfahren, umfassend ein Verfahren zur Herstellung eines Gießkerns (22, 24) nach einem der Ansprüche 11 bis 14, wobei das Verfahren den zusätzlichen Schritt eines Ablassens von fließfähigem Kernmaterial (28) aus dem Hüllbehälter (26) umfasst.

## Claims

1. An injection moulding device (10), including:
- a mould (12) in which both an injection moulding cavity (20) and a casting core mould cavity (18) are made,
- at least two flexibly elastic and/or dimensionally unstable sheath containers (26), wherein at least one first sheath container (26) is located in the casting core mould cavity (18) while at least one second sheath container (26) is located in the injection moulding cavity (20),
- at least one casting core (22), including one of the sheath containers (26) and a core material (28) that is optionally solidifiable and may be softened into a plastic deformation condition, in particular being capable of liquefying, wherein the material of the sheath container (26) is permanently solid and continuously cohesive, regardless of the degree of solidification of the core material (28) during proper operation of the casting core (22), and wherein the core material (28) is received in the sheath container (26) at least in the solid condition and during a change in its degree of solidification into and out of the solid condition,
- a core material affecting means (46) which is constructed to affect the core material (28) such that it liquefies and/or solidifies, and
- a moving device (30, 48) which is constructed to move the casting core (22, 24) between the casting core mould cavity (18) and the injection moulding cavity (20).

2. An injection moulding device (10) according to Claim 1, **characterised in that** the core material (28) may optionally be solidified and liquefied by changing an electrical and/or magnetic field that acts on it from outside and or by changing its temperature.

3. An injection moulding device (10) according to Claim 1 or 2, **characterised in that** the core material (28) includes thermoplastic synthetic material.

4. An injection moulding device (10) according to one of the preceding claims, **characterised in that** the material of the sheath containers (26) is a material having elastomeric deformation properties.

5. An injection moulding device (10) according to one of the preceding claims, **characterised in that** it includes a filling device (32, 36, 38, 40) which is coupled or may be coupled to at least one of the sheath containers (26) such that the sheath container (26) may optionally be filled with flowable core material by means of the filling device (32, 36, 38, 40).

6. An injection moulding device (10) according to Claim 5, **characterised in that** it includes a draining device (32, 36, 38, 40) which is coupled or may be coupled to the sheath container (26) such that core material (38) received in the sheath container (26) may be removed therefrom by means of the draining device.

7. An injection moulding device (10) according to Claim 6, **characterised in that** the filling device (32, 36, 38, 40) and the draining device (32, 36, 38, 40) have a common throughflow aperture (34).

8. An injection moulding device (10) according to Claim 7, **characterised in that** the filling device (32, 36, 38, 40) and the draining device (32, 36, 38, 40) have throughflow channels (36) which are common at least in certain sections.

9. An injection moulding device (10) according to Claim 7 or 8, **characterised in that** the filling device (32, 36, 38, 40) and the draining device (32, 36, 38, 40) include a common conveying device (40) which is constructed optionally to convey flowable core material (28) from a core material storage region (38) into the sheath container (26) or from the sheath container (26) into the core material storage region (38).

10. An injection moulding device (10) according to one of the preceding claims, **characterised in that** the core material affecting device (46) is constructed to change an electrical and/or magnetic field and/or to change a temperature of its environment.

11. An injection moulding method, which is carried out using an injection moulding device (10) according to one of the preceding claims, including the following steps:
- providing the flowable but reversibly solidifiable core material (28) in one of the sheath containers (26) which are in themselves flexibly elastic and/or dimensionally unstable,
- placing the sheath container (26) filled with flowable core material (28) in the casting core mould cavity (18) of the injection moulding device (10),
- solidifying the core material (28) in the sheath container (26) which has been placed in the casting core mould cavity (18) and
- moving the casting core (22) which is formed by the sheath container (26) having the solidified core material (28) out of the casting core mould cavity (18) and into the injection moulding cavity (20) by means of the moving device (30, 48),
- injecting flowable synthetic material (42) into the injection moulding cavity (20),
- liquefying the core material (28) which is located in the sheath container (26) in the injection moulding cavity (20),
- removing the sheath container (26) from the injected synthetic material (42),
- removing the injected cured synthetic material (42) from the injection moulding cavity (20), and
- moving the sheath container (26) out of the injection moulding cavity (20) and into the casting core mould cavity (18), wherein during an injection moulding procedure in the same mould cavity (12) a casting core (22) is made for an immediately following injection moulding procedure.

12. An injection moulding method according to Claim 11, wherein the step of providing includes a step of filling the sheath container (26) with flowable core material (28).

13. An injection moulding method according to Claim 11 or 12, wherein the step of solidifying includes changing an electrical and/or magnetic field in which the core material (28) is located at least in certain sections, and/or changing the temperature of the core material (28), in particular lowering the latter.

14. An injection moulding method according to Claim 11, 12 or 13, wherein, after the step of liquefying the core material (28) in the sheath container (26), the method includes a step of discharging the at this point flowable core material (28) from the sheath container (26).

15. An injection moulding method, including a method for making a casting core (22, 24) according to one of Claims 11 to 14, wherein the method includes the additional step of discharging flowable core material (28) from the sheath container (26).

## Revendications

1. Dispositif de moulage par injection (10), comprenant:
- un outil de moulage (12) dans lequel est formée aussi bien une cavité de moulage par injection (20) qu'une cavité de moule de noyau de moulage (18),
- au moins deux récipients enveloppants (26) élastiques souples ou/et de forme labile, dans lequel au moins un premier récipient enveloppant (26) se trouve dans la cavité de moule de noyau de moulage (18) tandis qu'au moins un deuxième récipient enveloppant (26) se trouve dans la cavité de moulage par injection (20),
- au moins un noyau de moulage (22), comprenant un des récipients enveloppants (26) et un matériau de noyau (28) pouvant au choix être solidifié ou ramolli, en particulier liquéfié, à un état de déformation plastique, dans lequel le matériau du récipient enveloppant (26) est, indépendamment du degré de solidification du matériau de noyau (28), durablement solide et continu sans interruption dans le fonctionnement prévu du noyau de moulage (22), et dans lequel le matériau de noyau (28) est contenu dans le récipient enveloppant (26) au moins à l'état solide et pendant un changement de son degré de solidification vers l'état solide et à partir de celui-ci,
- un dispositif (46) pour influencer le matériau de noyau, qui est conçu pour influencer le matériau de noyau (28) vers la liquéfaction et/ou la solidification, et
- un dispositif de déplacement (30, 48), qui est conçu pour déplacer le noyau de moulage (22, 24) entre la cavité de moule de noyau de moulage (18) et la cavité de moulage par injection (20).

2. Dispositif de moulage par injection (10) selon la revendication 1, **caractérisé en ce que** le matériau de noyau (28) peut au choix être solidifié et liquéfié par changement d'un champ électrique ou/et magnétique agissant sur lui de l'extérieur ou/et par changement de sa température.

3. Dispositif de moulage par injection (10) selon la revendication 1 ou 2, **caractérisé en ce que** le matériau de noyau (28) comprend une matière plastique thermoplastique.

4. Dispositif de moulage par injection (10) selon l'une quelconque des revendications précédentes, **caractérisé en ce que** le matériau des récipients enveloppants (26) est un matériau avec des propriétés de déformation élastomères.

5. Dispositif de moulage par injection (10) selon l'une quelconque des revendications précédentes, **caractérisé en ce qu'**il comprend un dispositif de remplissage (32, 36, 38, 40), qui peut être ou est couplé à au moins un des récipients enveloppants (26) de telle manière que le récipient enveloppant (26) puisse être rempli de matériau de noyau coulant au choix au moyen du dispositif de remplissage (32, 36, 38, 40).

6. Dispositif de moulage par injection (10) selon la revendication 5, **caractérisé en ce qu'**il comprend un dispositif d'évacuation (32, 36, 38, 40), qui peut être ou est couplé au récipient enveloppant (26), de telle manière que du matériau de noyau (38) contenu dans le récipient enveloppant (26) puisse être évacué hors de celui-ci au moyen du dispositif d'évacuation.

7. Dispositif de moulage par injection (10) selon la revendication 6, **caractérisé en ce que** le dispositif de remplissage (32, 36, 38, 40) et le dispositif d'évacuation (32, 36, 38, 40) présentent une ouverture de passage commune (34).

8. Dispositif de moulage par injection (10) selon la revendication 7, **caractérisé en ce que** le dispositif de remplissage (32, 36, 38, 40) et le dispositif d'évacuation (32, 36, 38, 40) présentent au moins localement des canaux de passage communs (36).

9. Dispositif de moulage par injection (10) selon la revendication 7 ou 8, **caractérisé en ce que** le dispositif de remplissage (32, 36, 38, 40) et le dispositif d'évacuation (32, 36, 38, 40) comprennent un dispositif de transport commun (40), qui est conçu pour transporter au choix du matériau de noyau coulant (28) d'une zone de réserve de matériau de noyau (38) dans le récipient enveloppant (26) ou du récipient enveloppant (26) dans la zone de réserve de matériau de noyau (38).

10. Dispositif de moulage par injection (10) selon l'une quelconque des revendications précédentes, **caractérisé en ce que** le dispositif (46) pour influencer le matériau de noyau est conçu pour faire varier un champ électrique ou/et magnétique ou/et pour faire varier une température de son environnement.

11. Procédé de moulage par injection qui est mis en oeuvre en utilisant un dispositif de moulage par injection (10) selon l'une quelconque des revendications précédentes, comprenant les étapes suivantes:
- préparer le matériau de noyau coulant (28), mais solidifiable de manière réversible, dans un des récipients enveloppants (26) élastiques souples ou/et de forme labile pris isolément,
- placer le récipient enveloppant (26) rempli de matériau de noyau coulant (28) dans la cavité de moule de noyau de moulage (18) du dispositif de moulage par injection (10),
- solidifier le matériau de noyau (28) dans le récipient enveloppant (26) placé dans la cavité de moule de noyau de moulage (18), et
- déplacer le noyau de moulage (22) formé par le récipient enveloppant (26) avec le matériau de noyau solidifié (28) de la cavité de moule de noyau de moulage (18) à la cavité de moulage par injection (20) au moyen du dispositif de déplacement (30, 48),
- injecter une matière plastique coulante (42) dans la cavité de moulage par injection (20),
- liquéfier le matériau de noyau (28), qui se trouve dans le récipient enveloppant (26) dans la cavité de moulage par injection (20),
- retirer le récipient enveloppant (26) hors de la matière plastique injectée (42),
- enlever la matière plastique injectée durcie (42) hors de la cavité de moulage par injection (20), et
- déplacer le récipient enveloppant (26) de la cavité de moulage par injection (20) à la cavité de moule de noyau de moulage (18), dans lequel on produit pendant une opération de moulage par injection, dans le même outil de moule (12), un noyau de moulage (22) pour une opération de moulage par injection qui suit immédiatement.

12. Procédé de moulage par injection selon la revendication 11, dans lequel l'étape de préparation comprend une étape de remplissage du récipient enveloppant (26) avec du matériau de noyau coulant (28).

13. Procédé de moulage par injection selon la revendication 11 ou 12, dans lequel l'étape de solidification comprend un changement d'un champ électrique ou/et magnétique, dans lequel le matériau de noyau (28) se trouve au moins localement, ou/et un changement de la température du matériau de noyau (28), en particulier sa diminution.

14. Procédé de moulage par injection selon la revendication 11, 12 ou 13 dans lequel le procédé comprend, après l'étape de liquéfaction du matériau de noyau (28) dans le récipient enveloppant (26), une étape de soufflage du matériau de noyau alors coulant (28) hors du récipient enveloppant (26).

15. Procédé de moulage par injection, comprenant un procédé de fabrication d'un noyau de moulage (22, 24) selon l'une quelconque des revendications 11 à 14, dans lequel le procédé comprend l'étape supplémentaire d'un soufflage de matériau de noyau coulant (28) hors du récipient enveloppant (26).
